Europäisches Patentamt

(19) European Patent Office  (11) Publication number: **0 080 483**

Office européen des brevets  **B1**

(12) **EUROPEAN PATENT SPECIFICATION**

(45) Date of publication of patent specification: **06.02.85**  (51) Int. Cl.⁴: **A 61 B 10/00**

(21) Application number: **82901739.1**

(22) Date of filing: **28.05.82**

(86) International application number:
**PCT/SE82/00192**

(87) International publication number:
**WO 82/04183 09.12.82 Gazette 82/29**

(54) **APPARATUS FOR DISPLAYING REFLECTED ULTRASONIC PULSES.**

(30) Priority: **29.05.81 SE 8103395**

(43) Date of publication of application:
**08.06.83 Bulletin 83/23**

(45) Publication of the grant of the patent:
**06.02.85 Bulletin 85/06**

(84) Designated Contracting States:
**AT BE CH DE FR GB LI LU NL**

(56) References cited:
**DE-A-2 806 671**
**DE-B-2 727 010**

(73) Proprietor: **BENTHIN, Morten**
**Vildandsvägen 18/1 205**
**S-222 34 Lund (SE)**
(73) Proprietor: **DAHL, Philip**
**Hans Gränd 27 B**
**S-222 48 Lund (SE)**

(72) Inventor: **BENTHIN, Morten**
**Vildandsvägen 18**
**S-222 34 Lund (SE)**
Inventor: **DAHL, Philip**
**Hans Gränd 27 B**
**S-222 48 Lund (SE)**
Inventor: **HOLMER, Nils-Gunnar**
**Gilleskroken 7**
**S 222 47 Lund (SE)**

(74) Representative: **Berglund, Gustav Arthur et al**
**AWAPATENT AB Box 5117**
**S-200 71 Malmö (SE)**

Courier Press, Leamington Spa, England.

**0 080 483**

## Description

The present invention relates, generally, to ultrasonic diagnostics and, more particularly, to an apparatus for displaying ultrasonic pulses transmitted by an altrasonic transmitter and received by an ultrasonic receiver, after reflection against boundary surfaces in the body.

During the last decade, there has been a growing tendency to use ultrasonics as an aid in medical diagnostics. Principally, ultrasonics have been used in the fields of cardiology and obstetrics.

Ultrasonic examination thus has become a complement to X-ray examination and, in some cases, may even supersede X-ray examination. The advantage is that the patient need not be exposed to ionizing radiation.

A more recent application of ultrasonic diagnostics concerns sinus complaints which previously have been diagnosed mainly by X-ray examination. On examination, an ultrasonic transmitter is excited which generates a sound-wave which is propagated at a known velocity into the tissue. When this sound-wave impinges upon a boundary surface in the body between structures of different acoustic impedance, part of the wave is reflected back to the transmitter which now functions as a receiver and converts the reflected sound-wave (echo) received into an electric signal. The amplitude of this signal is related to the intensity of the sound-wave and thus to the difference in acoustic impedance on either side of the said boundary surface, and the period of time between the transmission of the sound-wave and the reception of the echo is related to the distance between the transmitter and the boundary surface.

By reproducing the signal generated by the ultrasonic receiver as a function of time on an oscilloscope screen (cathode ray tube) there is thus obtained an image of the variations of the acoustic impedance along the path of the transmitted sound-wave or, in other words, an image of the position and character of the boundary surfaces between different tissue types along this path.

Normally, the sinuses are filled with air but, at certain complaints, may be filled with liquid. The acoustic impedance of air differs substantially from that of water, for which reason it is possible, by the method described above, to diagnose a complaint of this type by studying the echo image on the oscilloscope screen. The principal characteristic feature in this connection is that, in the case of a sinus filled with liquid, an echo is obtained also from the remote sinus wall, as seen from the transmitter. US—A—4168629 discloses an ultrasonic diagnostic apparatus for the detection of flaws, in which a cathode ray tube is used to display the ultrasonic echoes.

However, the use of a cathode ray tube for displaying ultrasonic pulse echoes will make an apparatus based upon the above described method comparatively bulky and expensive, and furthermore high voltages are required for operating the cathode ray tube proper.

The present invention therefore has for its object to provide an apparatus of the type referred to in the introduction, which apparatus eliminates the disadvantages arising from the use of a cathode ray tube and broadens the usefulness of the diagnostic method in that it utilizes a matrix display unit for reproducing an echo signal in A mode, i.e. the absolute values of the echo signal.

To achieve this and other objects of the present invention, the apparatus according to the invention comprises an analog-to-digital converter, the input of which is connected to the output of the receiver and in series with a compression amplifier comprised by the receiver, while the output of said analog-to-digital converter is connected to the input of a digital memory for storing consecutive instantaneous values of the converter output signal, a display unit of the matrix type with display elements arranged in rows and columns, said unit being connected on the one hand to a timing circuit for consecutively activating the columns and, on the other hand, to the output of the memory for activating the display elements of an activated column, each in response to an instantaneous value stored in the memory, and a clock circuit for triggering the conversion of the converter and the storage of the memory at a repetition rate which gives at least as many stored instantaneous values as there are columns in the display unit.

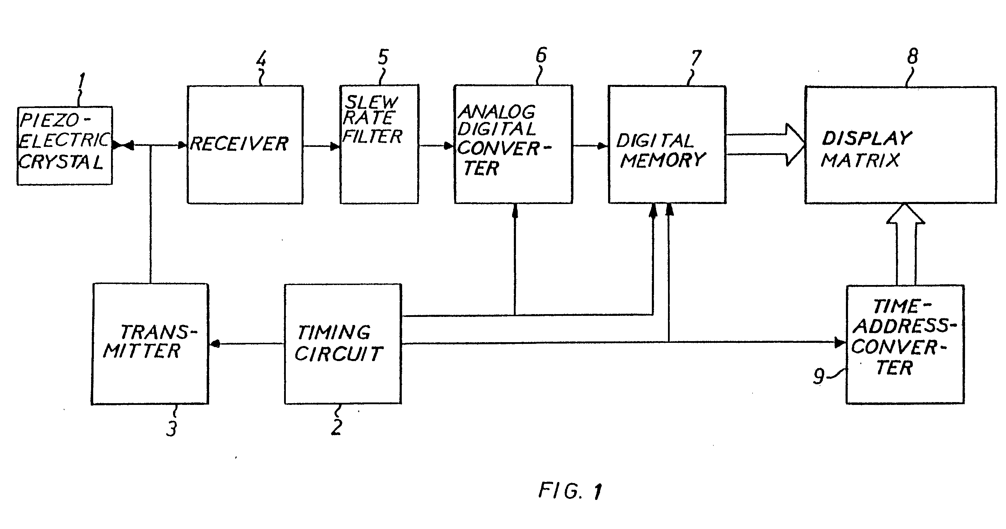

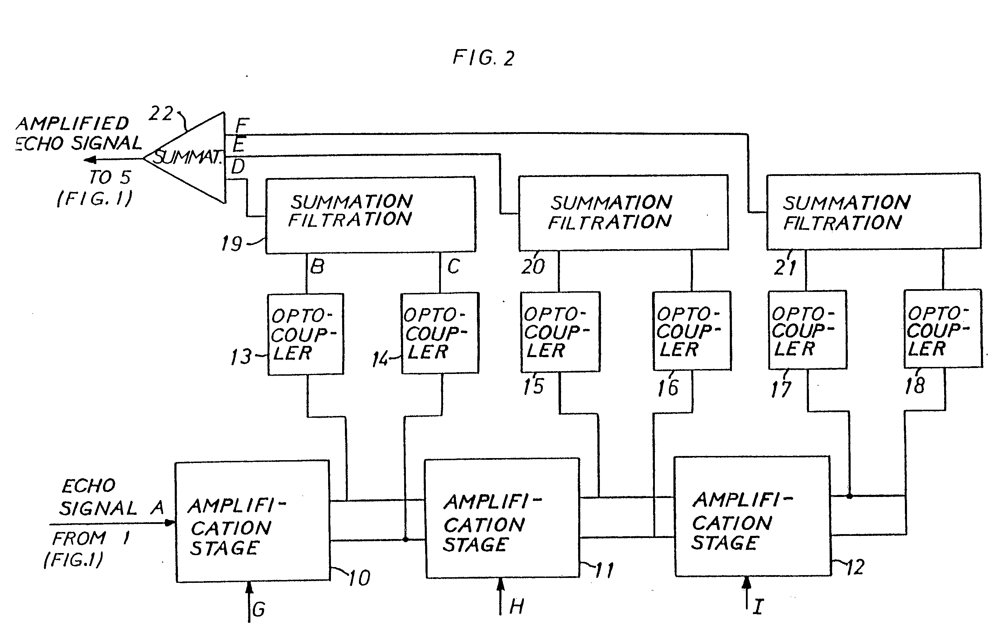

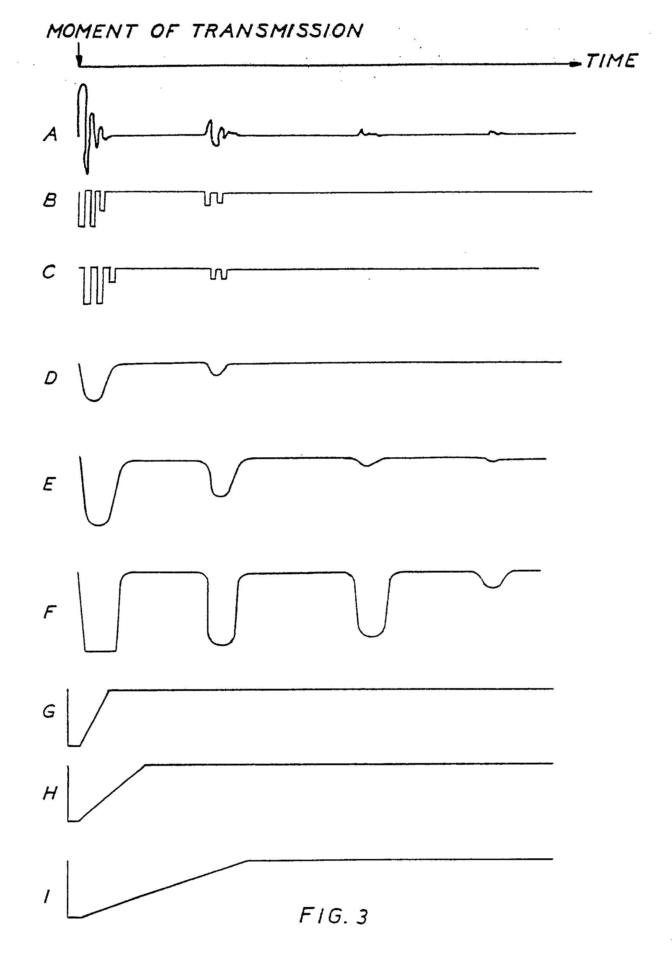

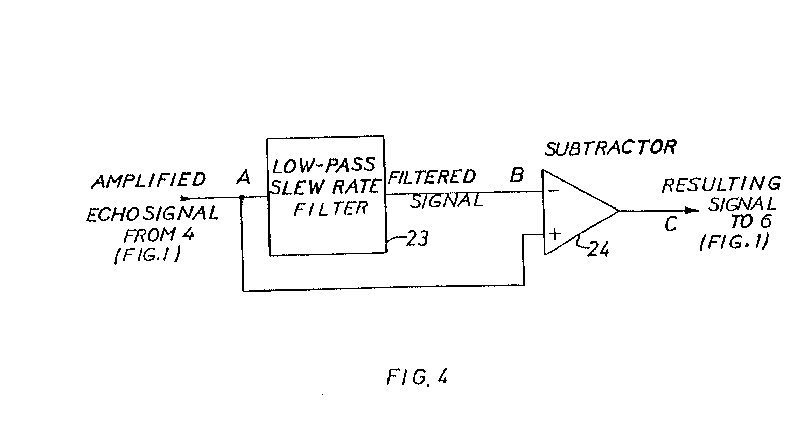

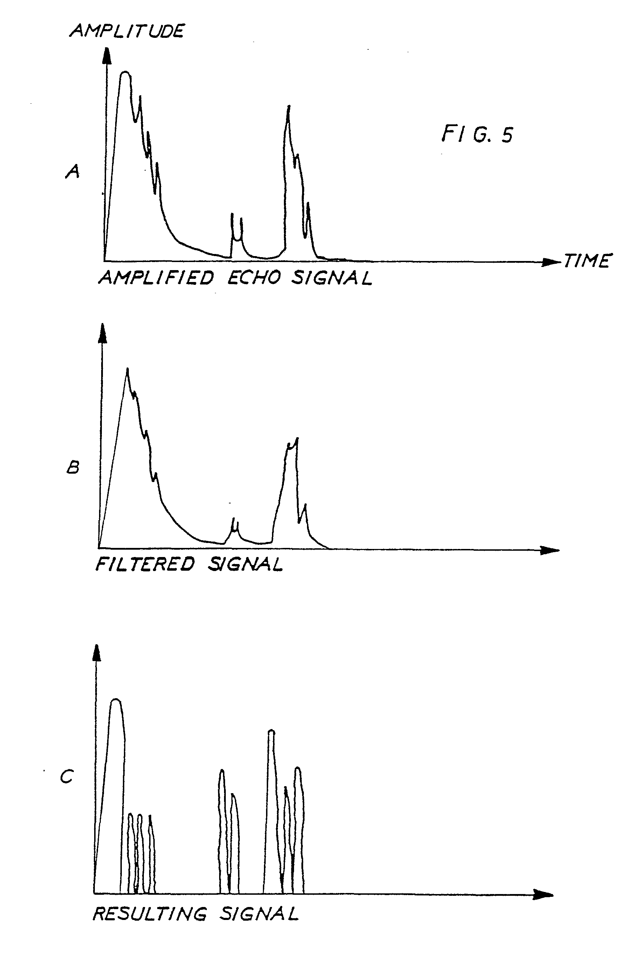

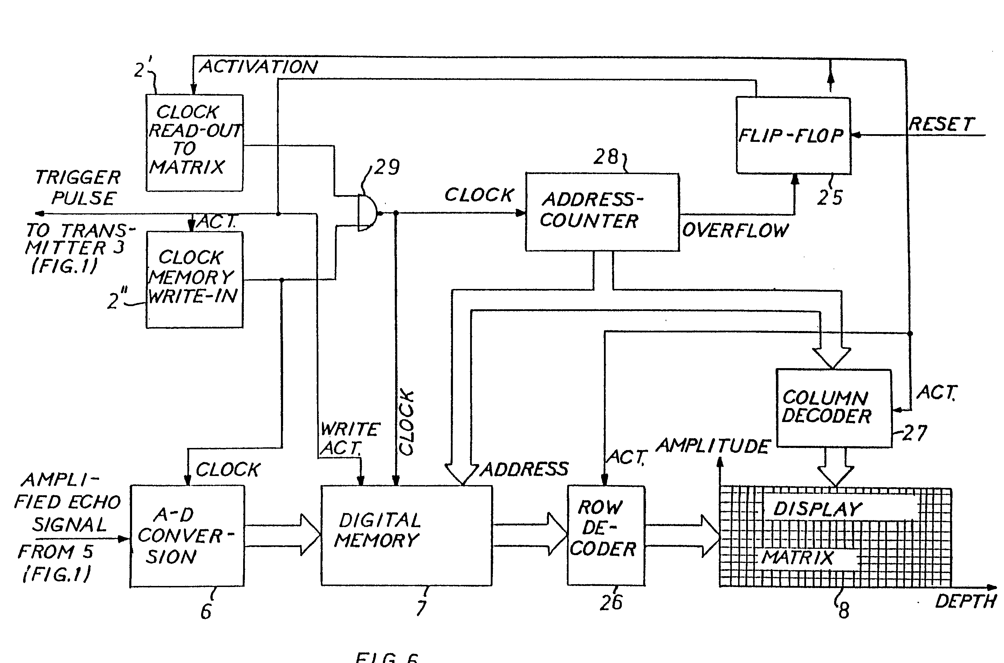

The invention will be described in greater detail below, reference being had to the accompanying drawings. Fig. 1 is a block diagram of an apparatus according to the present invention, utilizing ultrasonic equipment. Fig. 2 is a block diagram of an amplifier circuit included in the receiver of the equipment shown in Fig. 1. Fig. 3 shows the wave shapes occurring in the circuit according to Fig. 2. Fig. 4 is a block diagram of a non-linear filter included in the equipment shown in Fig. 1. Fig. 5 is an example of the processing of a signal in the filter shown in Fig. 4. Fig. 6 is a block diagram which illustrates in greater detail the storage and display of the ultrasonic echo signal.

The ultrasonic equipment shown in Fig. 1 comprises, in conventional manner, a piezoelectric crystal 1 which is connected to a transmitter 3 controlled by a timing circuit 2. The transmitter serves to excite the crystal to generate an ultrasonic pulse in the form of a number of oscillations. The crystal 1 is excited by an electric signal from the transmitter 3 and thus generates, by mechanical oscillations, the sound-wave which, for diagnostic purposes, is directed towards, for example, a sinus. Following the transmission of the ultrasonic pulse, the crystal 1 operates to convert reflected parts of the sound-wave into electric signals which are supplied to a receiver 4. As has been mentioned by way of introduction, the time between the transmission of the pulse and the reception of the echo is characteristic of the distance from the crystal 1 to a reflecting boundary surface in the body tissue. The amplitude of the output signal from the crystal 1 is characteristic of the magnitude of the difference in acoustic impedance at the said boundary surface. The receiver 4 comprises a compression amplifier which will be described in the following in connection with Fig. 2, and on the output side preferably is connected to a so-called slew rate filter 5, the output of which is connected in its turn to an analog-to-digital converter 6.

The digitalized signal values obtained from the analog-to-digital converter are stored in a digital memory 7 for subsequent display on a display unit 8 of the matrix type. The display unit 8 may consist of, for example, a gas discharge display unit or a display unit utilizing liquid crystals and having individually addressable display elements arranged in the form of a matrix. The matrix may comprise, for example 64×256 display elements.

In order to obtain a desired resolution in the measuring of, for example, one millimetre, the propagation rate of the sound-wave in the body tissue requires a conversion repetition rate in the analog-to-digital converter of about 0.77 MHz. By increasing the conversion repetition rate in the converter 6, for instance a doubling, a corresponding resolution increase is achieved. The conversion rate which is the same as the write-in frequency in the memory 7, is controlled by the timing circuit 2 which also controls the read-out of the values stored in the memory 7 to the display unit 8, but this takes place at a far lower frequency than the above-mentioned conversion rate, for instance 7 kHz. The latter frequency is so selected that the display unit 8 gives a non-flickering image.

The display unit 8 has display elements arranged in rows and columns, said columns being activated consecutively by means of a time-address converter 9 receiving clock pulses from the timing circuit 2, according as the digital values stored in the memory 7 are read out to the display unit for activation of a display element in each column, the height or row number of the display element in the matrix corresponding to the magnitude of the corresponding digital value stored in the memory 7. Instead of illuminating a single display element in each column, it is possible to illuminate the said element together with all underlying elements.

By utilizing, in accordance with the present invention, a display unit 8 of the matrix type, instead of a cathode ray tube, the size and cost of the ultrasonic equipment can be reduced considerably. In view of the fact that the matrix affords a limited resolution primarily in respect of the reproduction of the amplitude of the pulse echoes, and considering that the signal at the output of the piezoelectric crystal 1 is a high-dynamic signal, the receiver 4, according to the present invention, comprises an amplifier of the compression type. For optimum reproduction on the matrix 8, a nonlinear compression having a degree of compression increasing with the amplitude value has been found suitable.

A compression amplifier especially suitable for the apparatus according to this invention is shown in Fig. 2 and comprises three cascaded amplifier stages 10, 11 and 12. Thus, there is supplied to the amplifier stage 10 from the piezoelectric crystal 1 in Fig. 1 an echo signal A which is exemplified in Fig. 3A. Like the amplifier stages 11 and 12, the stage 10 has two outputs on which the amplified signal appears in, respectively, inverted and noninverted form. The outputs of the amplifier stages 10—12 are connected, each by one optocoupler 13—18, to a separate summation and filtration circuit 19—21 for each amplifier stage. The optocouplers 13—18 are biassed to rectify the transmitted signal. The output signals from the optocouplers 13, 14 are shown in Figs. 3B and C, respectively. The output signal which is obtained from the summation circuit 19 and which is a low-pass filtered summation of the signals from the optocouplers 13 and 14, is shown in Fig. 3D. The corresponding output signals from the circuits 20 and 21 are shown in Figs. 3E and F. The three signals D, E and F are added in a summator 22 and constitute an amplified compressed echo signal. The combined transmission characteristic of the amplifier in Fig. 2 will be essentially logarithmic. The amplifier stages 10, 11 and 12 may have a controllable amplification which can be utilized for damping considerably, for instance by means of controlled signals of the type shown in Figs. 3G, H and I, the response of the amplifier directly after the transmission of the ultrasonic pulse from the crystal 1, thereby to prevent overdriving of the amplifier.

The output signal of the receiver 4, which thus may be the output signal at the output of the summator 22 in Fig. 2, is supplied to the filter 5 for which a block diagram is shown in Fig. 4. This slew rate filter of the high-pass type actually comprises a slew rate filter 23 of the low-pass type and a subtractor 24. The input of the filter 23 and the positive input of the subtractor 24 are supplied with the amplified echo signal from the receiver 4, which signal has been exemplified in Fig. 5A. A characteristic feature of the slew rate filter is the limited amplitude variation rate of the filter output signal. The filter 23 is so designed that the said variation rate limitation is rendered operative only for positive edges of the input signal, for which reason the signal according to Fig. 5A, after passage of the filter 23, will have the appearance illustrated in Fig. 5B. By subtracting the signal in Fig. 5B from the signal in Fig. 5A in the subtractor 24, there is obtained a resulting filter output signal which is shown in Fig. 5C. This resulting signal represents primarily those parts of the amplified echo signal which have steep positive edges and is supplied to the analog-to-digital converter 6 for digitalization.

A preferred embodiment of the units 6—9 in Fig. 1 and their associated circuits is shown in Fig. 6. In this embodiment, the timing circuit 2 comprises a clock 2' controlling the read-out of data from the digital memory 7 to the matrix 8, and a clock 2" controlling the write-in of data into the digital memory 7 as well as the conversion in the analog-to-digital converter 6. The alternation between read-out and write-in is effected by a flip-flop 25 which, on transition to the set state, via its output Q transmits a trigger pulse to the transmitter 3, activates the clock 2" and switches the memory 7 to write-in. On transition of the flip-flop 25 to the reset state, the signal at the output $\bar{Q}$ of the flip-flop is used for activating the clock 2' as well as a row decoder 26 and a column decoder 27. The row decoder 26 is connected between the output of the digital memory 7 and the row inputs of the matrix 8, while the column decoder 27 is connected between the outputs of an address counter 28 and the column inputs of the matrix 8. The input of the address counter 28 is connected, via an OR gate 29, to the outputs of the clocks 2', 2", and the carry output of the address counter 28 is connected to the trigger input of the flip-flop 25. The counting state outputs of the address counter 28 are connected not only to the column decoder 27 but also to the address inputs of the digital memory 7.

As has been mentioned above, the clock 2" is activated when the flip-flop 25 is in its set state. The clock pulses from the clock 2" are supplied on the one hand to the analog-to-digital converter for controlling the conversion rate thereof and, on the other hand, via the gate 29 to the address counter 28 for supplying address signals to the digital memory 7. The instantaneous values of the amplified echo signal, digitalized by the converter 6, are thus stored in memory positions determined by the address counter 28. When digitalized values have been stored in a number of positions in the memory 7, which number corresponds to the counting capacity of the address counter 28, the counter 28 transmits a carry signal at its output connected to the flip-flop 25 which then is triggered to its reset state. With that, the analog-to-digital conversion and the write-in of data in the memory 7 is interrupted, and instead the clock 2' and the row and column decoders 26 and 27 are activated. According as the digital memory 7 and the address counter 28 receive clock pulses from the clock 2', the values stored in the memory 7 are read consecutively to the row decoder 26, simultaneously as the column decoder 27 for each indexing of the counter 28 appoints a specific column in the matrix 8. In the row decoder 26, the values read out from the memory 7 are so decoded that there is activated, in each column of the matrix 8 appointed by the column decoder 27, the display element which corresponds to the stored amplitude value, possibly together with all underlying display elements.

To sum up, the conversion and the display of the amplified echo signal thus are divided into two phases, i.e. the digitalization and storage of the echo signal and the read-out of the memory contents to the display matrix. The converter 6 is clocked at a suitable frequency so that adequate resolution is achieved. Each digital word from the converter 6 corresponds to a given instantaneous amplitude of the echo signal and is written in the memory 7. When the number of words corresponding to the desired pentration depth has been stored, the storage phase is terminated by the switching of the flip-flop 25. When, during the read-out phase, the words stored in the memory, each of which points to a row in the matrix 8, are read from the memory 7, the column decoder 27 at the same time consecutively points out the columns in the matrix 8. The display elements at the points of intersection between the appointed rows and columns are activated.

Finally, it should be mentioned that a number of modifications of the above described embodiment of the apparatus according to the invention are, of course, possible within the scope of this invention, as defined by the appended claims. For instance, it is possible to use, for permanent recording of the echo signal, a strip chart recorder, the advance of which is controlled by the clock pulses from the clock 2', while the recording deflection can be controlled digitally from the output of the memory 7 or by an analog signal obtained by means of a digital-to-analog converter connected between the output of the memory 7 and the recorder.

## Claims

1. An apparatus for displaying ultrasonic pulses transmitted by an ultrasonic transmitter (1, 3) and received by an ultrasonic receiver (1, 4), after reflection against boundary surfaces in the body, comprising an analog-to-digital converter (6), the input of which is connected to the output of the receiver (4) and in series with a compression amplifier (Fig. 2) comprised by the receiver, while the output of said analog-to-digital converter is connected to the input of a digital memory (7) for storing consecutive instantaneous values of the converter output signal, a display unit (8) of the matrix type with display elements arranged in rows and columns, said unit being connected on the one hand to a timing circuit (2) for consecutively activating the columns and, on the other hand, to the output side of the memory (7) for activating the display elements of an activated column, each in response to an instantaneous value stored in the memory, and a clock circuit (2″) for triggering the conversion of the converter (6) and the storage of the memory (7) at a repetition rate which gives at least as many stored instantaneous values as there are columns in the display unit.

2. An apparatus as claimed in claim 1, characterized in that the compression amplifier is a substantially logarithmic amplifier comprising a plurality of cascaded amplifier stages (10—12), the outputs of which are connected to a summation circuit (19—22).

3. An apparatus as claimed in claim 2, characterized in that the outputs of the amplifier stages (10—12) are connected, each by one optocoupler (13—18), to the summation circuit (19—22).

4. An apparatus as claimed in claim 2 or 3, characterized in that the amplifier stages (10—12) have a time-controlled amplification with a transitory amplification reduction directly after transmission of each ultrasonic pulse.

5. An apparatus as claimed in any one of claims 1—4, characterized in that a slew rate filter is connected directly before the input of the converter (6) for the admission of signal edges having a positive rate of amplitude change higher than a predetermined rate.

6. An apparatus as claimed in any one of claims 1—5, characterized in that the time circuit (2) is adapted to generate clock pulses of a first frequency for the read-in of data into the memory (7) and clock pulses of a second, lower frequency for read-out of data from said memory.

7. An apparatus as claimed in claim 6, characterized by an address counter (28) which is adapted to receive the clock pulses and which, upon overflow, controls the alternation between the clock pulses of said first and second frequencies.

8. An apparatus as claimed in any one of claims 1—7, characterized by a recorder connected to the memory (7) for receiving write-out of data read out from said memory, possibly via a digital-to-analog converter.

## Patentansprüche

1. Gerät zur Darstellung von Ultraschall-Echo-Impulsen, ausgesandt von einem Ultraschallsender (1, 3) und empfangen von einem Ultraschallempfänger (1, 4) nach Reflexion gegen Grenzflächen im Körper, umfassend einen Analog-Digital-Umwandler (6), dessen Eingang an den Ausgang des Empfängers (4) angeschlossen und mit einem vom Empfänger umfassten Verstärker mit Dynamikregelung (Fig. 2) reihengeschaltet ist, während der Ausgang des Analog-Digital-Umwandlers an den Eingang eines Digitalspeichers (7) zur Speicherung von aufeinanderfolgenden Momentanwerten des Ausgangssignals des Umwandlers angeschlossen ist, eine Darstellungseinheit (8) des Matrizentyps mit in Reihen und Kolonnen angeordneten Darstellungsgliedern, welche Einheit einerseits an einen Zeitkreis (2) zur sequentiellen Aktivierung der Kolonnen und anderseits an die Ausgangsseite des Speichers (7) zur Aktivierung der Darstellungselemente einer aktivierten Kolonne in Uebereinstimmung mit je einem im Speicher gelagerten Momentanwert angeschlossen ist, sowie einen Taktkreis (2″) zum Auslösen der Umwandlung des Umwandlers (6) und der Lagerung des Speichers (7) mit einer Wiederholungsfrequenz, die zumindest eine der Anzahl Kolonnen in der Darstellungseinheit entsprechende Anzahl gelagerter Momentanwerte gibt.

2. Gerät nach Anspruch 1, dadurch gekennzeichnet, dass der Verstärker mit Dynamikregelung ein hauptsächlich logarithmischer Verstärker ist, der aus mehreren kaskadengeschalteten Verstärkerstufen (10—12) besteht, deren Ausgänge an einen Summierkreis (19—22) angeschlossen sind.

3. Gerät nach Anspruch 2, dadurch gekennzeichnet, dass die Ausgänge der Verstärkerstufen (10—12) mittels je eines Optoschalters (13—18) an den Summierkreis (19—22) angeschlossen sind.

4. Gerät nach Anspruch 2 oder 3, dadurch gekennzeichnet, dass die Verstärkerstufen (10—12) eine zeitgesteuerte Verstärkung mit vorübergehender Verstärkungsabnahme direkt nach dem Aussenden jedes Ultraschallimpulses besitzen.

5. Gerät nach einem der Ansprüche 1—4, dadurch gekennzeichnet, dass unmittelbar vor dem Eingang des Umwandlers (6) ein Anstiegsgeschwindigkeitsfilter zum Durchlassen von Signalflanken eingeschaltet ist, die eine positive Amplitudenänderungsgeschwindigkeit aufweisen, welche höher ist als eine vorbestimmte solche Geschwindigkeit.

6. Gerät nach einem der Ansprüche 1—5, dadurch gekennzeichnet, dass der Zeitkreis (2) Taktimpulse einer ersten Frequenz zum Einlesen von Daten in den Speicher (7) und Taktimpulse einer zweiten, niedrigeren Frequenz zum Auslesen von Daten aus dem Speicher erzeugt.

7. Gerät nach Anspruch 6, gekennzeichnet durch einen Befehlszähler (28), der die Taktimpulse empfängt und bei Ueberlauf den Wechsel zwischen Taktimpulsen der genannten ersten und zweiten Frequenzen steuert.

8. Gerät nach einem der Ansprüche 1—7, gekennzeichnet durch einen an den Speicher (7) angeschlossenen Schreiber zum Empfang von aus dem Speicher angelesenen Daten zum Ausschreiben, ggf. über einen Digital-Analog-Umwandler.

## Revendications

1. Dispositif d'affichage d'impulsions ultrasonores émises par un émetteur à ultrasons (1, 3) et reçues par un récepteur à ultrasons (1, 4), après réflexion contre des surfaces d'extrémité dans le corps, comprenant un convertisseur analogique-numérique (6) dont l'entrée est connectée à la sortie du récepteur (4) et en série avec un amplificateur de compression (Figure 2) inclus dans le récepteur, tandis que la sortie du convertisseur analogique-numérique est connectée à l'entrée d'une mémoire numérique (7) servant à mémoriser des valeurs instantanées consécutives du signal de sortie de convertisseur, une unité d'affichage (8) du type matriciel dont les éléments d'affichage sont disposés en rangées et en colonnes, ladite unité étant connectée, d'une part, à un circuit de synchronisation (2) pour rendre consécutivement actives les colonnes et, d'autre part, au côté sortie de la mémoire (7) pour rendre actifs les éléments d'affichage d'une colonne rendue active, chacun en réponse à une valeur instantanée mémorisée dans la mémoire, et un circuit d'horloge (2″) pour déclencher l'opération de conversion du convertisseur (6) et la mémorisation en mémoire (7) à une vitesse de répétition qui donne au moins autant de valeurs instantanées mémorisées qu'il y a de colonnes dans l'unité d'affichage.

2. Dispositif selon la revendication 1, caractérisé en ce que l'amplificateur de compression est un amplificateur essentiellement logarithmique comprenant un ensemble d'étages amplificateurs en cascade (10—12) dont les sorties sont connectées à un circuit de sommation (19—22).

3. Dispositif selon la revendication 2, caractérisé en ce que les sorties des étages amplificateurs (10—12) sont connectées chacune par un coupleur optoélectronique (13—18) au circuit de sommation (19—22).

4. Dispositif selon l'une quelconque des revendications 2 et 3, caractérisé en ce que les étages amplificateurs (10—12) assurent une amplification réglée dans le temps avec une réduction d'amplification transitoire juste après la transmission de chaque impulsion ultrasonore.

5. Dispositif selon l'une quelconque des revendications 1 à 4, caractérisé en ce qu'un filtre de taux de balayage est connecté juste avant l'entrée du convertisseur (6) pour l'admission de bords de signaux ayant un taux de variation d'amplitude positif supérieur à un taux prédéterminé.

6. Dispositif selon l'une quelconque des revendications 1 à 5, caractérisé en ce que le circuit de synchronisation (2) est agencé pour engendrer des impulsions d'horloge d'une première fréquence pour l'écriture de données dans la mémoire (7) et des impulsions d'horloge d'une seconde fréquence inférieure pour la lecture de données en mémoire.

7. Dispositif selon la revendication 6, caractérisé en ce qu'un compteur d'adresse (28) est agencé pour recevoir les impulsions d'horloge et pour commander, lors du dépassement de sa capacité, la commutation entre les impulsions d'horloge de la première fréquence et celles de la seconde fréquence.

8. Dispositif selon l'une quelconque des revendications 1 à 7, caractérisé en ce qu'il comprend un enregistreur connecté à la mémoire (7) pour recevoir des données d'écriture lues en mémoire, éventuellement par l'intermédiaire d'un convertisseur numérique-analogique.

FIG. 1

FIG. 2

AMPLIFIED ECHO SIGNAL
22
SUMMAT.
TO 5 (FIG.1)

F
E
D

SUMMATION FILTRATION (19)
B
C

SUMMATION FILTRATION (20)

SUMMATION FILTRATION (21)

OPTO-COUP-LER 13
OPTO-COUP-LER 14
OPTO-COUP-LER 15
OPTO-COUP-LER 16
OPTO-COUP-LER 17
OPTO-COUP-LER 18

AMPLIFI-CATION STAGE 10
A
G

AMPLIFI-CATION STAGE 11
H

AMPLIFI-CATION STAGE 12
I

ECHO SIGNAL A
FROM 1 (FIG.1)

2

0 080 483

MOMENT OF TRANSMISSION

TIME

A

B

C

D

E

F

G

H

I

FIG. 3

3

FIG. 4

**0 080 483**

AMPLITUDE

FIG. 5

A

TIME

AMPLIFIED ECHO SIGNAL

B

FILTERED SIGNAL

C

RESULTING SIGNAL

5

FIG.6